# EUROPEAN PATENT SPECIFICATION

(11) **EP 0 330 465 B1**
(45) Date of publication and mention of the grant of the patent: **20.01.1993**
(21) Application number: 89301769.9
(22) Date of filing: 23.02.1989
(51) Int. Cl.: G01C 1/08, H01Q 1/12

(54) **Device for indicating bearings in azimuth and inclination**
Einrichtung zur Anzeige von Azimut- und Neigungsrichtungen
Dispositif d'indication des directions d'azimuth et d'inclinaison

(30) Priority: 23.02.1988 GB 8804167
(43) Date of publication of application: 30.08.1989
(73) Proprietor: Weatherlake, John George Pax, Wargrave Berkshire (GB)
(72) Inventor: Weatherlake, John George Pax, Wargrave Berkshire (GB); Coleman, Mark, Berkshire (GB)
(74) Representative: Bridge-Butler, Alan James

(56) References cited:
- EP-A- 0 128 053
- DE-A- 3 150 959
- DE-A- 3 540 293
- FR-A- 1 359 336
- GB-A- 2 124 375

## Description

This invention relates to a device for indicating bearings in azimuth and inclination and which, in one aspect, can be used as a sextant and in another as a device to assist in setting up apparatus for receiving and/or transmitting electromagnetic wave signals, for example radio, television and telecommunications signals.

There are disadvantages when using sextants of the usual type when it is not possible to ascertain the horizon. Thus problems arise in the use of sextants when they are used away from a horizontal horizon such as that produced at sea and the present invention is intended to overcome some of these difficulties and to also provide a device which has alternative uses.

DE-A-3 150 959 discloses a sextant which can be used for reading angles of inclination, there is also provision of visual indicator means for showing when the sextant parts are horizontal and vertical. There is however no provision for reading or indicating angles of azimuth.

According to the present invention a sextant device includes a mirror located on a first part and an index mirror location on a second part, which is movable over an index scale, means for setting a predetermined angle of the second part on the index scale and means for producing a visual and/or audio signal when said first part is horizontal characterised by means for setting a predetermined angle of azimuth for said first part, said means acting on a second indicator means for producing a visual and/or audio signal when said present angle of azimuth is achieved by manipulating the altitude of the device.

Third indicator means may also be included for producing a visual and/or audio signal when said first part is vertically upright.

The device may also include means for visually observing the angle of azimuth and thus, means for visually setting and observing the angle of azimuth may include a magnetic compass with visual readout.

One or more of the indicator signals can be indicated on the device and/or by means remote therefrom.

Preferably the indicator means are electrically operated, for example, by an electrical battery which can be carried on the device itself.

The device can include means for attaching it to apparatus for receiving and/or transmitting electromagnetic wave signals, for example radio, television and telecommunication signals and thus, the attachment means may be arranged to enable the device to be secured to the front of a television satellite dish receiver.

With this arrangement the attachment means may include a number of legs for connection to the rim of the dish of the receiver and, if desired, these car be adjustable to accommodate dishes of different dimensions.

The invention can be performed in various ways but one embodiment will now be described by way of example and with reference to the accompanying drawing in which :
Figure 1 is a diagrammatic view of a device for indicating bearings in azimuth and inclination according to the invention and attached to a television satellite dish receiver; and,
Figure 2 is an electric circuit diagram for an electric current used in the device.

As shown in the drawings the device is generally in the form of the well known type of nautical sextant and comprises a first part in the form of a quadrant 1 which carries a scale 3 to indicate elevation angles and which is pivotally connected to a second part which is in the form of an elevation setting arm 2. The outer end of the arm 2 is provided with a pointer 4 which moves over the scale 3 and this indicates the relative angle between the two parts. The quadrant 1 is provided with a viewing eye piece 5 and a first reflecting mirror 6. The inner pivoted end 7 of the arm 2 is provided with a second mirror 8 to provide the well known type of nautical sextant. The outer end of the arm 2 is provided with an adjustment wheel 9 so that accurate movement of the arm 2 can be achieved, the wheel 9 acting through a worm and quadrant gear (not shown) in well known manner.

The quadrant 1 is provide with a battery box 10 which carries a first mercury tilt switch 11. This switch is connected to first indicator means provided by a first light source 12 carried in the eye piece 5 which is illuminated when the quadrant 1 is horizontal.

A compass 13 is also carried on the battery box 10 so that it is directly behind the horizon mirror 6 so that it can be read through the eye piece 5. In the arrangement being described means are provided for electrically reading the compass by mounting a sensor within the compass bowl which is triggered by a light source below the card and which passes through a hole in the card or a reflecting spot on the card when the sensor is mounted on one side of the card. This signal is passed to a second indicator means in the form of a second light source 14 which is also carried in the eye piece 5.

A second mercury tilt switch 15 is mounted on the battery box 10 and is connected to a third indicator means in the form of a third light source 16, again carried in the eye piece 5. This mercury switch 15 is arranged so that the third light source 16 is illuminated when the quadrant 1 is vertically upright.

A jack plug point 17 is provided on the battery box to enable suitable wire connections to be made to the illumination circuits and so that remote reading lights can be provided.

The apparatus provided according to the invention enables it to be levelled for taking sights when away from a sea horizon. Land navigation is usually carried out at night by taking star sights, from tables it is possible to calculate the expected azimuth of any star. This azimuth is then set on the compass 13 and when the second light source 14 is illuminated the sextant is pointing directly at the star. The mercury tilt switches 11 and 15 ensure that when the first and third light sources 12 and 16 are illuminated the sextant is horizontal and vertical. The expected altitude of the star having previously been set on the arm 2 it is then easier to identify the star and take its present altitude using the sextant in the usual way with the mirror 8 acting as an index mirror and the mirror 6 acting as the horizon mirror.

The device described above can also be used to assist in setting up apparatus for receiving and/or transmitting electro-magnetic wave signals. Such devices require a clear line of sight from a point on the ground where the receiver or transmitter is situation to, for example, a satellite in geo-static orbit. Unlike the stars such a satellite stays in a fixed direction relative to a point on the ground. From tables it is possible to calculate the azimuth and elevation from any given point. As mentioned above an aerial, such as a satellite dish must have an uninterrupted line of sight to be able to receive a signal from the satellite and if the sextant is used to establish this line of sight, provided nothing appears in the index mirror 8 of the sextant at given settings the line of sight is clear. Thus, in order to set up a line of sight it is merely necessary to index the device with the necessary azimuth and elevation bearings and provided all the light sources 12, 14 and 16 are illuminated and nothing is visible in the index mirror 8 then the line of sight is clear, thus establishing a suitable point of mounting for, for example, a television satellite dish receiver.

In order to mount such a receiver at the appropriate angle the arm 2 of the device is provided with a suitable mounting bracket 18 which is secured to attachment means 19 which carries three adjustable mounting legs 20. The mounting legs 20 are secured to the attachment means 19 by pivots 21 at one end and are provided with clamps 22 at their other ends so that they can be secured to the aerial dish receiver indicated by reference numeral 23. If desired the legs 20 can be adjustable in length to enable the device to be attached to satellite dishes of different dimensions.

The satellite dish 23 is provided with mounting means of well known type (not shown) to enable it to be securely mounted and to enable it to be tilted in any desired direction.

In order to set up the dish 23 the device is mounted on its legs 20 on the dish so that it is central at the front of the dish. With the required settings already on the device the remote reading lights (not shown) are attached in the jack plug 17 on the battery box and located behind the dish and adjacent to the mounting means. The dish is now adjusted to a suitable tilt by reading the remote reading display, and provided all lights are illuminated the dish will be pointed at the satellite. The line of sight having previously been cleared the dish is now either accurately lined up on the satellite or very close to such alignment which can be finely adjusted by making minor alterations to the setting whilst tuning into the received signal.

It will be appreciated that if the device is merely intended for use as a sextant the mounting bracket 18 can be omitted and the sextant can be used for taking accurate star sights even if a horizon is not available, again, the sextant type device can be used for establishing a line of sight for a receiving and/or transmitting device for electro-magnetic wave signals. With the bracket 18 attached it can, as described above, be used for accurately setting up receiving and/or transmitting apparatus.

In an alternative arrangement the light sources 12, 14, 16 can be replaced by means for producing an audio signal such as a buzzer or bell or again, such audio signal apparatus could be included along with the visual illumination means. Yet again the signals could be transmitted to some other form of electrical apparatus, especially for distant reading.

If the device is merely to be used for setting up receiving and/or transmitting apparatus then the compass 13 which, in the arrangement described can provided a visual reading, can be replaced by a device which merely provides an illuminated and/or audio signal. Again, in the arrangement described above the compass is of the face reading type but this could be replaced by a ribbon type compass or, for example, a non-magnetized electronic bearing indicator. If the compass is to be relied upon for visual signals however it is of course desirable that the compass reading should be visible through the horizon mirror 6.

It will be appreciated that when the invention is used for setting up the angle of elevation of the dish the angle setting on the sextant must be doubled due to the effect of the two mirrors but this principle is well known to sextant users.

In the arrangement shown the compass 13 is mounted on the battery box 10 but if desired the battery box could be located on the other side of the quadrant 1 closer to the eye piece to facilitate the electrical connections.

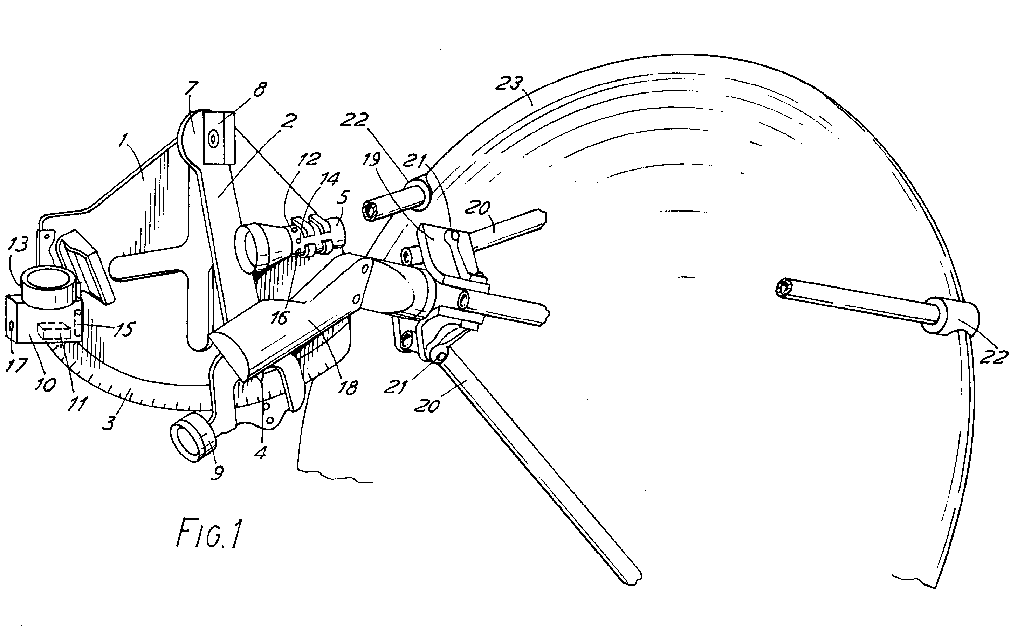

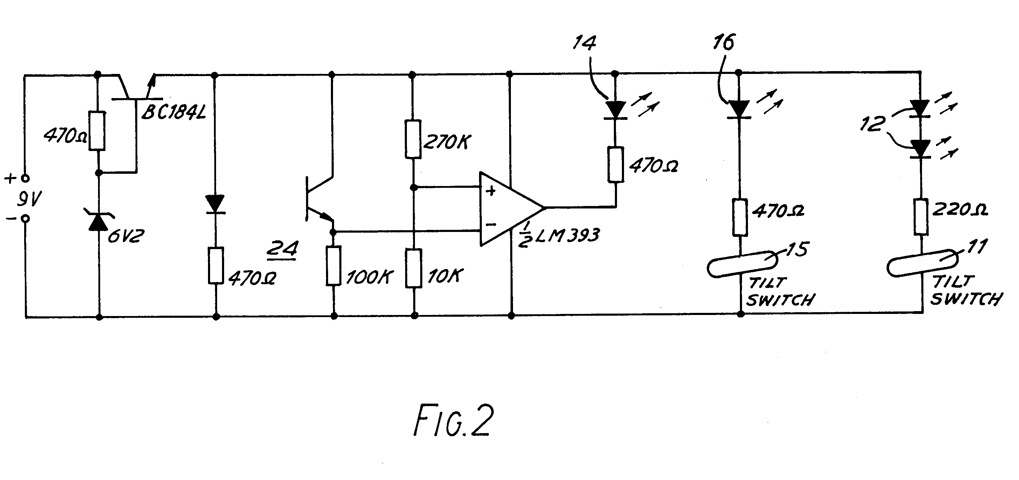

Figure 2 shows an electronic circuit suitable for for with the apparatus and the same reference numerals are used to indicate similar parts to that shown in Figure 1. Thus, the two mercury tilt switches are identified by reference numerals 11 and 15 and the first and third light sources 12 and 16 are provided by light emitting diodes. If desired the horizontal light source could be in the form of two diodes 12 to more easily distinguish it from the light source 16 indicating the vertical position. The means for reading the compass include a photo transistor indicated generally by reference numeral 24 which sends a signal to second light source 14 which is again in the form of a light emitting diode.

## Claims

1. A sextant device including a mirror located on a first part (1) and an index mirror location on a second part (2), which is movable over an index scale (3), means (3)(4) for setting a predetermined angle of the second part (2) on the index scale (3) and means (11)(12) for producing a visual and/or audio signal when said first part (1) is horizontal characterised by means (13) for setting a predetermined angle of azimuth for said first part (1), said means (13) acting on a second indicator means (14) for producing a visual and/or audio signal when said present angle of azimuth is achieved by manipulating the altitude of the device.

2. A sextant device as claimed in claim 1 characterised by a third indicator means (15)(16) for producing a visual and/or audio signal when said first part (1) is vertically upright.

3. A sextant device as claimed in claim 1 or claim 2 characterised by means (5)(13) for visually observing the angle of azimuth.

4. A sextant device as claimed in claim 3 characterised by means for visually setting and observing the angle of azimuth includes a magnetic compass (13) with visual read out.

5. A sextant device as claimed in any one of said preceding claims 1 to 4 characterised in that one or more of said indicator signals are indicated on the device.

6. A sextant device as claimed in any one of said preceding claims 1 to 5 characterised in-that said indicator signals are indicated by means remote from the device.

7. A sextant device as claimed in any one of said preceding claims 1 to 6 characterised in that indicator means (11)(12)(14)(15)(16) are electrically operated.

8. A sextant device as claimed in claim 7 characterised in that said indicator means (11)(12)(14)(15)(16) are operated by an electrical battery (10).

9. A sextant device as claimed in claim 8 in which the battery (10) is carried on the device.

10. A sextant device as claimed in claims 1 to 9 characterised by means (18)(19)(20)(21)(22) for attaching the device to apparatus (23) for receiving and/or transmitting electromagnetic wave signals.

11. A sextant device as claimed in claim 10 characterised in that said attachment means (18)(19)(20)(21)(22) enable the device to be secured to the front of a television satellite dish receiver (23).

12. A sextant device as claimed in claim 11 characterised in that the attachment means (18)(19)(20)(21)(22) include a number of legs (20) for connection to the rim of the dish of said receiver (23).

13. A sextant device as claimed in claim 12 in which said legs (20) are adjustable to accommodate dishes (23) of different dimensions.

## Patentansprüche

1. Sextanteneinrichtung, welche einen an einem ersten Teil (1) angeordneten Spiegel und einen an einem zweiten Teil (2) angeordneten Indexspiegel, der über eine Indexskala (3) beweglich ist, umfaßt, Mittel (3) (4) zum Einstellen eines vorbestimmten Winkels des zweiten Teils (2) an der Indexskala (3) und Mittel (11) (12) zum Erzeugen eines visuellen und/oder hörbaren Signals, wenn das erste Teil (1) horizontal ist, gekennzeichnet durch Mittel (13) zum Einstellen eines vorbestimmten Azimutwinkels für das erste Teil (1), wobei diese Mittel (13) auf ein zweites Anzeigemittel (14) zur Erzeugung eines visuellen und/oder hörbaren Signals wirken, wenn der vorhandene Azimutwinkel durch Manipulieren der Gestirnshöhe der Einrichtung erreicht ist.

2. Sextanteneinrichtung nach Anspruch 1, gekennzeichnet durch dritte Anzeigemittel (15) (16) zur Erzeugung eines visuellen und/oder hörbaren Signals, wenn das erste Teil (1) vertikal aufrecht steht.

3. Sextanteneinrichtung nach Anspruch 1 oder 2, gekennzeichnet durch Mittel (5) (13) zur visuellen Beobachtung des Azimutwinkels.

4. Sextanteneinrichtung nach Anspruch 3, gekennzeichnet durch Mittel zum visuellen Einstellen und Beobachten des Azimutwinkels, welche einen Magnetkompaß (13) mit visueller Ablesung umfaßt.

5. Sextanteneinrichtung nach einem der Ansprüche 1 bis 4, dadurch gekennzeichnet, daß eines oder mehrere der Anzeigesignale an der Einrichtung angezeigt werden.

6. Sextanteneinrichtung nach einem der Ansprüche 1 bis 5, dadurch gekennzeichnet, daß die Anzeigesignale durch von der Einrichtung entfernt angeordnete Mittel angezeigt werden.

7. Sextanteneinrichtung nach einem der Ansprüche 1 bis 6, dadurch gekennzeichnet, daß die Anzeigemittel (11) (12) (14) (15) (16) elektrisch betätigt sind.

8. Sextanteneinrichtung nach Anspruch 7, dadurch gekennzeichnet, daß die Anzeigemittel (11) (12) (14) (15) (16) durch eine elektrische Batterie (10) betrieben werden.

9. Sextanteneinrichtung nach Anspruch 8, bei welcher die Batterie (10) von der Einrichtung getragen wird.

10. Sextanteneinrichtung nach Anspruch 1 bis 9, gekennzeichnet durch Mittel (18) (19) (20) (21) (22) zum Befestigen der Einrichtung an einem Gerät (23) zum Empfang und/oder zum Senden elektromagnetischer Wellensignale.

11. Sextanteneinrichtung nach Anspruch 10, dadurch gekennzeichnet, daß die Befestigungsmittel (18) (19) (20) (21) (22) ein Befestigen der Einrichtung vor einem Fernsehsatellitenschüsselempfänger (23) ermöglichen.

12. Sextanteneinrichtung nach Anspruch 11, dadurch gekennzeichnet, daß die Befestigungsmittel (18) (19) (20) (21) (22) eine Anzahl von Beinen (20) zur Bestigung am Rand der Schüssel des Empfängers (23) umfassen.

13. Sextanteneinrichtung nach Anspruch 12, bei welcher diese Beine (20) zur Anpassung an Schüsseln (23) unterschiedlicher Abmessungen einstellbar sind.

## Revendications

1. Dispositif à sextant comprenant un miroir monté sur une première partie (1) et un emplacement pour miroir d'indexation sur une seconde partie (2), qui est mobile sur une échelle d'indexation (3), des moyens (3, 4) pour régler un angle prédéterminé de la seconde partie (2) sur l'échelle d'indexation (3) et des moyens (11, 12) pour produire un signal visuel et/ou audio quand ladite première partie (1) est horizontale, caractérisé par des moyens (13) pour régler un angle azimutal prédéterminé pour ladite première partie (1), lesdits moyens (13) agissant sur des seconds moyens indicateurs (14) pour produire un signal visuel et/ou audio quand ledit angle azimutal actuel est obtenu en manipulant l'altitude du dispositif.

2. Dispositif à sextant selon la revendication 1, caractérisé par des troisièmes moyens indicateurs (15, 16) pour produire un signal visuel et/ou audio quand la première partie (1) est disposée verticalement.

3. Dispositif à sextant selon la revendication 1 ou 2, caractérisé par des moyens (5, 13) pour observer visuellement l'angle azimutal.

4. Dispositif à sextant selon la revendication 3, caractérisé en ce que les moyens pour régler visuellement et observer l'angle azimutal comprennent une boussole magnétique (13) à lecture visuelle.

5. Dispositif à sextant selon l'une quelconque des revendications 1 à 4, caractérisé en ce que l'un ou plusieurs des signaux indicateurs sont indiqués sur le dispositif.

6. Dispositif à sextant selon l'une quelconque des revendications 1 à 5, caractérisé en ce que lesdits signaux indicateurs sont indiqués sur des moyens éloignés du dispositif.

7. Dispositif à sextant selon l'une quelconque des revendications 1 à 6, caractérisé en ce que les moyens indicateurs (11), (12), (14), (15), (16) sont actionnés électriquement.

8. Dispositif à sextant selon la revendication 7, dans lequel les moyens indicateurs (11), (12), (14), (15), (16) sont actionnés par une batterie électrique (10).

9. Dispositif à sextant selon la revendication 8, dans lequel la batterie (10) est supportée sur le dispositif.

10. Dispositif à sextant selon l'une quelconque des revendications 1 à 9, caractérisé par des moyens (18), (19), (20), (21), (22) pour le fixer à un appareil (23) destiné à recevoir et/ou transmettre des signaux à ondes électromagnétiques.

11. Dispositif à sextant selon la revendication 10, caractérisé en ce que lesdits moyens de fixation (18), (19), (20), (21), (22) permettent au dispositif d'être fixé à l'avant d'un récepteur parabolique (23) pour satellite de télévision.

12. Dispositif à sextant selon la revendication 11, caractérisé en ce que les moyens de fixation (18), (19), (20), (21), (22) comprennent un certain nombre de jambes (20) destinées à leur liaison avec le pourtour de l'antenne réceptrice parabolique (23).

13. Dispositif à sextant selon la revendication 12, caractérisé en ce que lesdites jambes (20) sont réglables pour s'adapter à des récepteurs (23) de dimensions différentes.
